# EUROPEAN PATENT APPLICATION

(11) **EP 3 663 067 A1**
(43) Date of publication of application: **10.06.2020**
(21) Application number: 19199094.4
(22) Date of filing: 24.09.2019
(51) Int. Cl.: B29C 45/14, B29C 45/04, B29C 51/00, B29C 51/26, B29K 75/00, B29K 711/08, B29K 711/10, B29K 711/14, B29L 31/30, B29C 45/02, B29C 51/08

(54) **METHOD OF MANUFACTURING REAL MATERIAL PRODUCT HAVING COMPOSITE LAYER AND USING LIQUID-PHASE REACTIVE CURING METHOD**

(30) Priority: 07.12.2018 KR 20180157213
(71) Applicant: Intops. Co., Ltd., Anyang-si, Gyeonggi-do 14088 (KR); Kim, Keun Ha, Gyeonggi-do 14088 (KR)
(72) Inventor: KIM, Keunha, 14088 Anyang-si, Gyeonggi-do (KR); CHOI, Wonjae, 14088 Anyang-si, Gyeonggi-do (KR); CHOI, Jongsu, 14088 Anyang-si, Gyeonggi-do (KR)
(74) Representative: Zardi, Marco

(57) **Abstract**

A method of manufacturing a real material product having a composite layer and using a liquid-phase reactive curing method according to the present invention can precisely and beautifully manufacture a real material product through a double injection process, and can implement various patterns. The bottom of a real material layer (10) is coated with a plastic resin layer (12), and the top of the real material layer is coated with a PUA or PUR layer (20).

## Description

### CROSS-REFERENCE TO RELATED APPLICATION

This application claims the benefit of Korean Patent Application No. 10-2018-0157213 filed on December 7, 2018, which is hereby incorporated by reference herein in its entirety.

### BACKGROUND

### 1. Technical Field

The present invention relates to a method of manufacturing a real material product having a composite layer and using a liquid-phase reactive curing method. More specifically, the present invention relates to a method of manufacturing a real material product in which a composite layer is formed on both surfaces of a real material by using a liquid-phase reactive curing method.

### 2. Description of the Related Art

An interior material, such as realwood, is used as a finishing material for the interior and exterior finishing of automobiles, the panels of mobile phones, and the buttons and logo parts of electronic devices such as washing machines, and thus the appearances, such as texture, touch, etc., of products can be improved and internal structures can be protected by blocking noise, flames, oxygen, etc.

Korean Patent No. 10-0913811 discloses a method of manufacturing a molded product using a realwood film as an interior material. As shown in FIG. 1, in this patent, a rear layer 20' is firstly injected on the bottom of a realwood film 10,' and a surface layer 30' is secondly injected on the top of the realwood film 10.' The rear layer 20' and the surface layer 30' are made of the same material, i.e., a thermoplastic resin, such as an ABS resin, an acrylic resin, or a polycarbonate resin.

Korean Patent Application Publication No. 10-2018-0069404 of the present applicant is directed to a "method of manufacturing a molded realwood product," and discloses a process of insert-injecting a plastic resin with a realwood and then painting the over surfaces of the realwood. A painted layer prevents damage to the surface of the realwood from the outside, and allows natural wood texture and luster to be maintained for a long time.

In these patents, for example, a spray coating method and a compression molding method are used as secondary processes for forming coating layers, such as a surface layer and a coating layer.

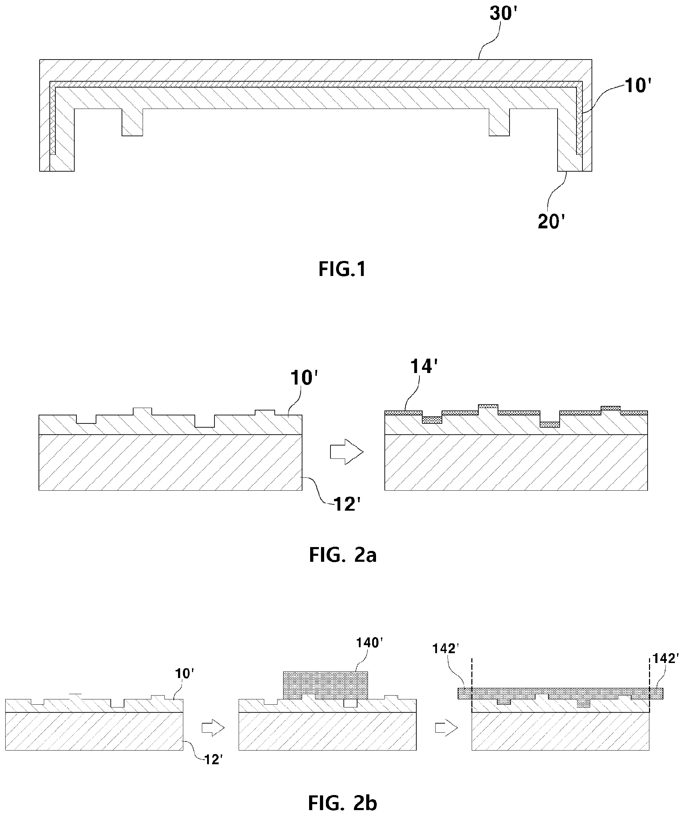

In the case of the spray coating method, as shown in FIG. 2a, the spray coating method is a method of forming a coating layer 14' using a spray on the top of a realwood film 10' on the bottom of which is formed a resin layer 12' made of a plastic material. Usually, the top surface of the realwood film 10' is often rough like real wood. Since the spray contains a volatile material, such as thinner, to facilitate injection, the volatile material evaporates during a subsequent drying process even when a coating layer is smoothly formed. Accordingly, this method is disadvantageous in that the coating layer having a high roughness remains as shown in the drawing and thus it is necessary to perform smoothing work.

In the case of the compression molding method, as shown in FIG. 2b, in a state in which a material 140' to be cured has been discharged onto the top of a realwood film 10' on the bottom of which is formed a resin layer 12' made of a plastic material, the material 140' is uniformly compressed by pressing molds (not shown), thereby fabricating a coating layer. However, this method is inconvenient in that it is necessary to cut away edge portions 142,' formed due to overflows of the material 140,' after coating.

### SUMMARY

Accordingly, an object of the present invention is to provide an improved liquid-phase reactive curing molding manufacturing method which enables a composite layer to be formed in a real material layer.

In order to achieve the above-described object, the present invention provides a method of manufacturing a real material product having a composite layer and using a liquid-phase reactive curing method, the method including: (1) forming a real material layer by cutting and hot-forming a real material; (2-1) forming a plastic resin layer on the first surface of the real material layer by mounting the real material layer in the first cavity of a molding machine and curing a plastic resin fed to the first cavity; (2-2) forming a second resin layer by mounting the real material layer, on which the plastic resin layer is formed, in the second cavity of the molding machine, feeding a liquid resin to a second surface, and curing the liquid resin; and (2-3) during the performance of step (2-2), forming a plastic resin layer on a first surface of another second real material layer by feeding a plastic resin to the other second real material layer mounted in the first cavity of the molding machine and curing the plastic resin; thereby successively injection-molding real material products each having a composite layer in which a plastic resin layer is formed on a first surface and a cured resin layer is formed on a second surface.

The second resin layer may be made of any one of polyurethane (PUR) and polyurea (PUA) materials.

The plastic resin layer may be made of any one of polycarbonate (PC), polyimide (PI), polyethersulfone (PES), polyarylate (PAR), polyethylene naphthalate (PEN), polyethyleneterephthalate (PET), cycloolefin copolymer, acrylic, acrylonitrile butadiene styrene (ABS), acrylonitrile styrene acrylate (ASA), polybutylene terephthalate (PBT), and styrene acrylonitrile (SAN).

The real material is made of any one of a carbon fiber composite material including wood, fabric, stone, artificial leather, or plastic, a composite material such as glass fiber reinforced plastic, and a metal sheet.

In order to improve adhesion to the polyurethane (PUR) or polyurea (PUA) material, plasma preprocessing, primer preprocessing with a material having urethane or polyolefin chloride as a main component, or both plasma preprocessing and primer preprocessing may be performed on the second surface of the real material layer.

A three-dimensional volume may be imparted to, a glossy layer for gloss may be formed on, or a color may be imparted to the plastic resin layer or second resin layer by using pattern molds.

The present invention provides a real material product including the composite layer which is manufactured by the above-described method.

### BRIEF DESCRIPTION OF THE DRAWINGS

The above and other objects, features, and advantages of the present invention will be more clearly understood from the following detailed description taken in conjunction with the accompanying drawings, in which:
FIG. 1 is a sectional view of a conventional molded realwood product;
FIG. 2a is a conceptual diagram illustrating a conventional spray coating method;
FIG. 2b is a conceptual diagram illustrating a conventional compression molding method;
FIG. 3 is a flowchart showing a process up to the fabrication of a real material layer in a process of manufacturing a real material product having a composite layer and using a liquid-phase reactive curing method according to the present invention;
FIG. 4 is a flowchart showing a double injection molding process in the process of manufacturing a real material product having a composite layer and using a liquid-phase reactive curing method according to the present invention; and
FIGS. 5a to 5d are views illustrating a work method by using plan views of a molding machine for the process of FIG. 4.

### DETAILED DESCRIPTION

Some embodiments of the present invention will be described in detail below with reference to the accompanying exemplary drawings.

It should be noted that in the assignment of reference symbols to the components of the drawings, the same components are designated by the same reference symbols as much as possible even when they are shown in different drawings. Furthermore, in the following description of the present invention, when it is determined that a detailed description of a well-known technology related to the present invention may unnecessarily make the gist of the present invention obscure, the detailed description will be omitted.

A liquid-phase reactive curing method according to the present invention is characterized in that first and second injection (molding) processes are simultaneously and successively performed in a single molding machine in order to manufacture real materials each having a composite layer. Conventionally, when a laminating method, a painting method such as spraying, or an injection process is applied to a real material, it is necessary to repeatedly perform similar molding processes in order to form a composite layer. Accordingly, the conventional method is disadvantageous in that work efficiency is low, the overall process is complicated, and yield is low.

Furthermore, the present invention is characterized in that a plastic resin layer and a polyurethane or polyurea layer are simultaneously formed on a first surface and a second surface, respectively, around a real material layer by applying a simultaneous molding process to a real material, thereby enabling a product having a composite layer to be rapidly and precisely manufactured.

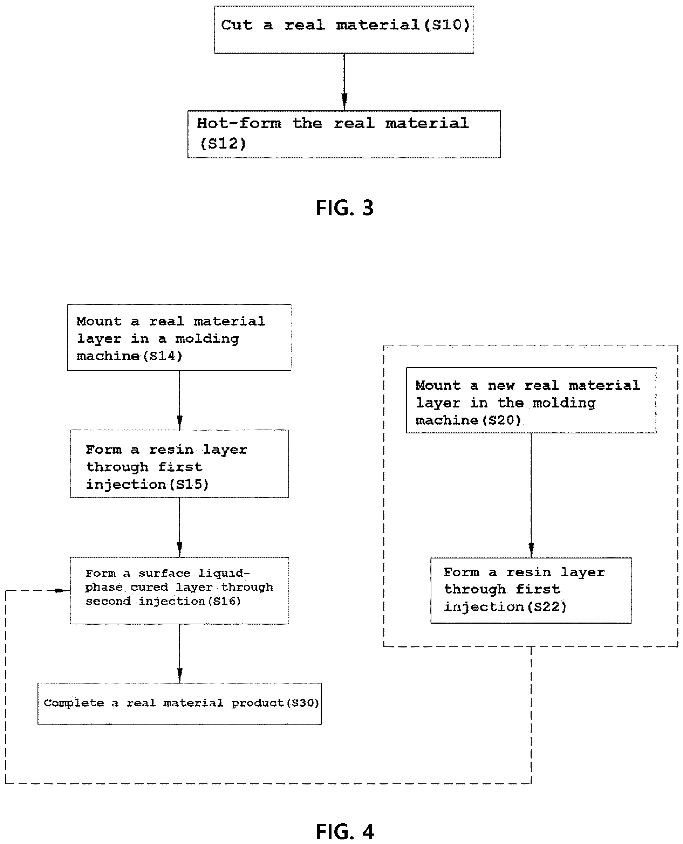

A real material product having a composite layer and using a liquid-phase reactive curing method according to the present invention is manufactured through the process of FIGS. 3 and 4.

First, a real material, such as wood, is cut to fit the final shape of a product at step S10. Wood is merely one example. The real material may be fabric, stone, artificial leather, a carbon fiber composite material including plastic such as carbon fiber reinforced plastic (CFRP), a composite material such as glass fiber reinforced plastic, a metal sheet, or the like, and is not limited to a particular material. Although cutting is preferably laser cutting using an NC machine tool, laser cutting may be omitted or physical cutting using a cutting blade may be performed in the case of a material having high heat resistance or a metal having high strength.

Thereafter, the cut real material is subjected to hot forming at step S12. More specifically, a mold previously fabricated to fit the final shape of the product is preheated, and the real material is placed in the mold and thermally compressed using a press machine. In the case where there are many voids in the real material, when the real material is impregnated with a transparent plastic resin solution such as a acrylic or SAN solution, and powder and then subjected to a hot forming process, voids are removed by thermal compression, and thus bubbles can be prevented from being generated in a subsequent molding process. In the case of a real material whose color and physical properties change due to heat, a hot forming process may be omitted, and the real material may be directly fed to a molding process which will be described later. Hereinafter, in the present specification, a real material semi-finished product immediately after passing through the hot forming process or immediately before being fed to the molding process is referred to as a "real material layer."

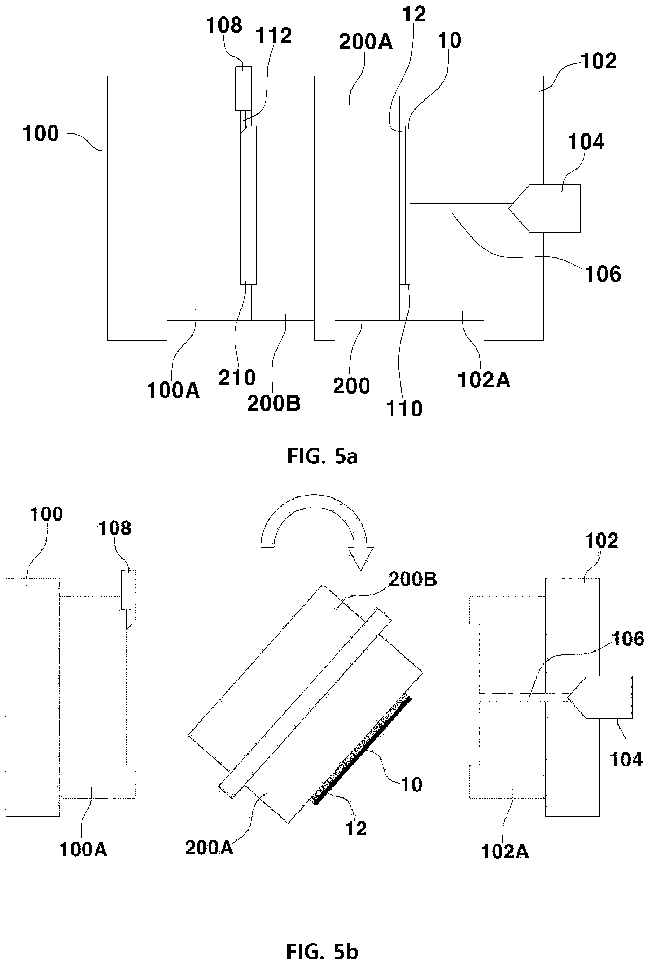

Next, the double molding process of FIG. 4 will be described in terms of its structure with reference to FIGS. 5a to 5d showing the plan views of a molding machine.

The molding machine for implementing a liquid-phase reactive curing method according to the present invention includes: a movable plate 100; a movable mold 100A which is integrated with the movable plate 100; a fixed plate 102; a fixed mold 102A which is integrated with the fixed plate 102 and extends to face the movable mold 100A; and a rotatable mold 200 which is interposed between the movable mold 100A and the fixed mold 102A. The rotatable mold 200 includes two split molds 200A and 200B which have the same shape and form the back surface of the real material 110.

A first head 104 is disposed through the side surfaces of the fixed plate 102 as a nozzle. The inner end of the first head 104 communicates with a first cavity 110 and is connected to a first flow path 106 passing through the fixed mold 102A, having a small diameter and being slender, and the outer end of the first head 104 is connected to a screw device (not shown). Accordingly, a solution discharged by a hopper (not shown) is extruded through a screw and fed to the first cavity 110 through the first head 104 and the first flow path 106. The solution may be a solution of any one of polycarbonate (PC), polyimide (PI), polyethersulfone (PES), polyarylate (PAR), polyethylene naphthalate (PEN), polyethyleneterephthalate (PET), cycloolefin copolymer, acrylic, acrylonitrile butadiene styrene (ABS), acrylonitrile styrene acrylate (ASA), polybutylene terephthalate (PBT), styrene acrylonitrile (SAN), etc. as long as it can form a plastic resin.

A second flow path 112 having a small diameter is installed in a passage extending from the side surface of the movable mold 100A to a second cavity 210, and a second head 108 is disposed through the side surface, communicating with the second flow path 112, as a nozzle. Solutions are fed to the second head 108 from an isocyanate tank (not shown) and a polyol tank (not shown), a mixture of the solutions forms a polyurethane (PUR) solution, and the polyurethane solution is fed to the second flow path 112. Amine is fed in place of polyol, and then polyurea PUA may be fed. PUR has excellent insulation and waterproof performance, waterproof performance, easy processability and workability, and excellent adhesion to a base material.

PUA has excellent heat resistance, excellent adhesion to a base material, is as fast as curing time is several seconds, and has excellent strength and elasticity.

Thereafter, as a work method, in the above-described molding machine, the real material layer 10 having passed through the process of FIG. 3 is placed inside the first cavity 110, and then a plastic resin layer 12 is formed on the bottom surface of the real material layer 10 (the left surface of the real material layer 10 in FIG. 5a) by feeding plastic resin through the first head 104 and the first flow path 106. Although now shown specifically in FIG. 5a, the first flow path 106 is formed to make a detour in a portion in contact with the first cavity 110, and resin is fed to the rear surface of the real material layer 10. The second cavity 210 is in a standby state in which it is not loaded.

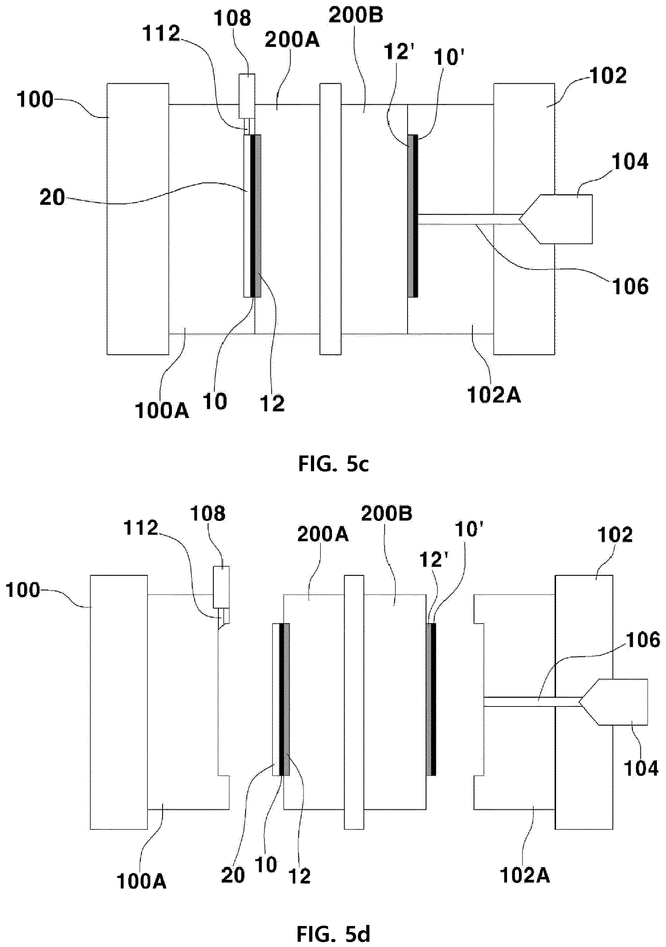

Thereafter, the rotatable mold 200 is rotated in the shown arrow direction over 180 degrees by using the space obtained by linearly moving the movable plate 100 and the movable mold 100A to the left, as shown in FIG. 5b, and then another new real material layer 10' is received from a feeding machine (not shown) and mounted in the first cavity 110. In this case, the top surface of the real material layer 10 to which the plastic resin layer 12 is attached is exposed in the second cavity 210. In this state, when PUA or PUR is fed through the second head 108 and plastic resin is fed through the first head 104, an upper layer 20 is formed on the top side of the real material layer 10 and a plastic resin layer 12' is formed on the bottom surface of the new real material layer 10,' as shown in FIG. 5c. Furthermore, the movable mold 100A and the rotatable mold 200 are linearly moved to the left, as shown in FIG. 5d, and a real material layer 10 in which a composite layer is formed is taken out, thereby completing a real material product using a liquid-phase reactive curing process. Real material products may be automatically and successively manufactured in a single molding machine through the molding process of the present invention by repeating the process of returning the new real material layer 10' to the process of FIG. 5b and then receiving a new real material layer again.

In the process of the present invention, the first head 104 melts and feeds thermoplastic resin and is thus heated to a high temperature equal to or higher than 200°, and the second head 108 feeds a material in a liquid state within the temperature range of 40 to 90°C. The liquid material is fed between the real material layer 10 and the cavity 210, fills empty space, and is then cured, thereby utilizing an advantage in which the liquid-phase reactive process is rapid.

Furthermore, the shape and size of the composite layer may be precisely determined by changing the shape of the molds and the cavities, and thus the disadvantages of the spray coating method and the compression molding method can be eliminated at once.

The work flow of the double molding process in the above molding machine will be described with reference to FIG. 4.

First, a real material layer 10 is mounted in the molding machine at step S14, and a plastic resin layer is formed on the bottom surface of the real material layer 10 through a first injection process at step S15. A new real material layer 10' is received and mounted in the molding machine at step S20, and a PUA or PUR layer 20 is formed on the top surface of the real material layer 10 through a second injection process at step S16 and, simultaneously, a plastic resin layer is formed on the bottom surface of the real material layer 10' through a first injection process at step S22. The real material layer 10 in which a composite layer is formed is completed as a real material product and then separated at step S30. The new real material layer 10' enters a standby state for a second injection process, and another new real material layer is fed and enters a standby state for a first injection process.

In the present invention, the PUA or PUR layer formed on the top surface of the real material layer 10 is advantageous in that it has excellent durability, is not sensitive to changes in temperature and pressure, and can highlight the naturalness and beauty of the real material through a glossy or matte treatment.

As described above, the present invention simultaneously forms the a plastic resin layer 12 and the polyurethane or polyurea layer 20 on the first surface and the second surface, respectively, around the real material layer 10 by applying the simultaneous molding process to the real material, thereby rapidly and precisely manufacturing a product having a composite layer.

The molding process of the present invention may be modified as follows:
Although the typical molds are assumed in the foregoing description, a three-dimensional volume may be imparted, a glossy layer for gloss may be formed, or a color may be imparted, by using pattern molds.

Moreover, in order to allow PUA and PUR liquid to be desirably adhered to the real material layer 10, plasma or primer preprocessing or both plasma preprocessing and primer preprocessing may be performed on the top surface of the real material layer 10 after the real material hot forming process S12 of FIG. 3. It is preferable that a primer material be formed by adding an acryl-type component based on urethane or polyolefin chloride. It was found that adhesion was 30 N or more when the top surface of wood was coated with a primer and adhesion was improved to 25 N or more when the top surface of carbon was coated with a primer.

According to the present invention, an esthetic appearance can be implemented regardless of the roughness of a material because the thickness of the coating layer can be adjusted by adjusting the space of the molds in the injection molding process, and various designs can be implemented on the surfaces of the molds through glossy or matte treatment, patterning, or the like.

Furthermore, according to the present invention, liquid-phase curing molding is completed through a simultaneous injection molding process, and thus the overall process is simplified, so that yield rate is high, quality is improved, manufacturing cost can be reduced, and a three-dimensional pattern can be maximized.

Although the preferred embodiments of the present invention have been described as examples above, these embodiments are merely examples and do not limit the scope of the present invention. Various modifications may be made to the present invention, and all these modifications fall within the scope of the present invention. The scope of the present invention is defined only by the attached claims.

## Claims

1. A method of manufacturing a real material product having a composite layer and using a liquid-phase reactive curing method, the method comprising:
(1) forming a real material layer by cutting and hot-forming a real material;
(2-1) forming a plastic resin layer on a first surface of the real material layer by mounting the real material layer in a first cavity of a molding machine and curing a plastic resin fed to the first cavity;
(2-2) forming a second resin layer by mounting the real material layer, on which the plastic resin layer is formed, in a second cavity of the molding machine, feeding a liquid resin to a second surface, and curing the liquid resin; and
(2-3) during performance of step (2-2), forming a plastic resin layer on a first surface of another second real material layer by feeding a plastic resin to the other second real material layer mounted in the first cavity of the molding machine and curing the plastic resin;
thereby successively injection-molding real material products each having a composite layer in which a plastic resin layer is formed on a first surface and a cured resin layer is formed on a second surface.

2. The method of claim 1, wherein the second resin layer is made of any one of polyurethane (PUR) and polyurea (PUA) materials.

3. The method of claim 2, wherein the plastic resin layer is made of any one of polycarbonate (PC), polyimide (PI), polyethersulfone (PES), polyarylate (PAR), polyethylene naphthalate (PEN), polyethyleneterephthalate (PET), cycloolefin copolymer, acrylic, acrylonitrile butadiene styrene (ABS), acrylonitrile styrene acrylate (ASA), polybutylene terephthalate (PBT), and styrene acrylonitrile (SAN) .

4. The method of claim 2, wherein the real material is made of any one of a carbon fiber composite material including wood, fabric, stone, artificial leather, or plastic, a composite material including glass fiber reinforced plastic, and a metal sheet.

5. The method of claim 2, wherein in order to improve adhesion to the polyurethane (PUR) or polyurea (PUA) material, plasma preprocessing, primer preprocessing with a material having urethane or polyolefin chloride as a main component, or both plasma preprocessing and primer preprocessing are performed on the second surface of the real material layer.

6. The method of claim 4, wherein a three-dimensional volume is imparted to, a glossy layer for gloss is formed on, or a color is imparted to the plastic resin layer or second resin layer by using pattern molds.

7. A real material product comprising the composite layer which is manufactured by the method of any one of claims 1 to 6.

## Amended claims

### Amended claims in accordance with Rule 137(2) EPC.

1. A method of manufacturing a real material product having a composite layer and using a liquid-phase reactive curing method, the method comprising:
(1) forming a real material layer by cutting and hot-forming a real material;
(2-1) forming a plastic resin layer (12) on a first surface of the real material layer by mounting the real material layer in a first cavity (110) of a molding machine and curing a plastic resin fed to the first cavity (110);
(2-2) forming a second resin layer by mounting the real material layer, on which the plastic resin layer (12) is formed, in a second cavity of the molding machine, feeding a liquid resin to a second surface, and curing the liquid resin; and
(2-3) during performance of step (2-2), forming a plastic resin layer (12) on a first surface of another second real material layer by feeding a plastic resin to the other second real material layer mounted in the first cavity (110) of the molding machine and curing the plastic resin;
thereby successively injection-molding real material products each having a composite layer in which a plastic resin layer (12) is formed on a first surface and a cured resin layer is formed on a second surface,
wherein the second resin layer is made of any one of polyurethane (PUR) and polyurea (PUA) materials, and
**characterized in that** in order to improve adhesion to the polyurethane (PUR) or polyurea (PUA) material, plasma preprocessing, primer preprocessing with a material having urethane or polyolefin chloride as a main component, or both plasma preprocessing and primer preprocessing are performed on the second surface of the real material layer.

2. The method of claim 1, wherein the plastic resin layer (12) is made of any one of polycarbonate (PC), polyimide (PI), polyethersulfone (PES), polyarylate (PAR), polyethylene naphthalate (PEN), polyethyleneterephthalate (PET), cycloolefin copolymer, acrylic, acrylonitrile butadiene styrene (ABS), acrylonitrile styrene acrylate (ASA), polybutylene terephthalate (PBT), and styrene acrylonitrile (SAN).

3. The method of claim 1, wherein the real material is made of any one of a carbon fiber composite material including wood, fabric, stone, artificial leather, or plastic, a composite material including glass fiber reinforced plastic, and a metal sheet.

4. The method of claim 3, wherein a three-dimensional volume is imparted to, a glossy layer for gloss is formed on, or a color is imparted to the plastic resin layer (12) or second resin layer by using pattern molds.

5. A real material product comprising the composite layer which is manufactured by the method of any one of claims 1 to 4.
